Europäisches Patentamt

European Patent Office

Office européen des brevets

(11) Publication number: **0 321 315**
A2

# (12) EUROPEAN PATENT APPLICATION

(21) Application number: 88312033.9

(22) Date of filing: **19.12.88**

(51) Int. Cl.⁴: **H 04 N 1/40**
**H 04 N 1/46**

(30) Priority: **18.12.87 US 135031**

(43) Date of publication of application:
**21.06.89 Bulletin 89/25**

(84) Designated Contracting States:
**BE DE FR GB IT NL**

(71) Applicant: **CONTEX GRAPHIC SYSTEMS, INC.**
**43 Manning Road**
**Billerica MA 01821 (US)**

(72) Inventor: **Wake, Warren K.**
**1 Hartford Lane, Apt. E**
**Nashua New Hampshire 03063 (US)**

(74) Representative: **Milhench, Howard Leslie et al**
**R.G.C. Jenkins & Co. 26 Caxton Street**
**London SW1H 0RJ (GB)**

(54) **Half tone printing or display apparatus.**

(57) A method and apparatus for effecting enhanced digital half-tone reproduction using a binary displaying device promotes good colour tone fidelity while retaining high spatial resolution. The input image is subdivided into a matrix of component pixels each representing an intensity value at a corresponding image location. The intensity is related to the maximum possible intensity of the pixel and the decision to print is made on the basis of the intensity relation of the pixel and an internally generated pseudo-random number. In one embodiment a number of display deciding matrices are stored in memory and one matrix is selected in accordance with the intensity relation of the pixel and a location in the selected matrix is accessed in accordance with a pseudo-random number with the information at that location used to decide whether or not to display the pixel.

EP 0 321 315 A2

FIG. 4

# Description

## HALF TONE PRINTING OR DISPLAY APPARATUS

### Field of the Invention

This invention relates to graphics display and, more specifically, to a method and apparatus for displaying half-tone images using a binary or similarly restricted displaying device and aims to provide improved spatial and colour or tonal resolution in the displayed image.

### Background of the Invention

Reproducing images by digital half-toning techniques is a common undertaking whenever graphic images are produced by restricted (print/no-print) reproduction output apparatus. This occurs in newspaper and magazine publishing, photo-journalism, and a host of other printing related fields including product packaging. For example, a desired image may be collected and converted into an electrical signal representative of the input image by a video camera or scanner. The resulting signal contains the image as a two dimensional discrete matrix with each matrix element storing values representing the picture intensity and colour at a corresponding point in the image to be reproduced. Digital bi-level imaging techniques are then used to convert the input image signal into one suitable for a restricted output or display device. An example of such an output device is a dot matrix printer, which provides a bi-level display made up of print characters of equal intensity blended with non-printed areas. A "pixel" as used herein represents the smallest area for a print/no-print decision for the printed image.

The objective of digital bi-level imaging is to recreate the input image on the bi-level display device with a minimal loss of spatial resolution and colour intensity (tonal) variations while suppressing secondary pattern formation. In practice, a two dimensional matrix representation of the input image is created with an intensity value assigned to each element in the matrix. The intensity of each matrix element of the input image is processed to determine the binary choice (i.e., "print" or "no-print") for the corresponding pixel location in the output image. The decision to print at that pixel location is made based on the local intensity of the corresponding raster element in the input image.

In one prior art approach, a threshold intensity value is chosen. If the image intensity at a local pixel exceeds the threshold value, an affirmative print decision is assigned to that pixel position in the output image. This direct, image element - to pixel correspondence provides good spatial resolution in the printed image, but poorly recreates the tonal variations existing in the input image since all areas of colour intensity which exceed the threshold are reproduced with a like colour saturation.

Alternatively, to retain colour intensity or tone variation for the printed binary output, output pixels have been grouped into clusters or modules. The number of printed pixels in each module determines the number of colour tone variations (white to colour saturation) possible for that module location. For example, a module made up of nine pixels (a 3-by-3 print module) permits ten levels of colour intensity variation (colour printed in 0-to-9 pixels). It becomes obvious that the larger the output picture module (print no-print pixel possibilities) chosen, the greater the amount of tonal variation for that module location in the output picture. This "grouping" or "half-tone" technique rests on the concept that when the image is observed from a normal viewing distance, i.e., 12-14 inches, the human eye averages the printed/ non-printed areas in each picture area to form colour relative intensity shadings.

An output picture module size defined by 16 x 16 pixels provides 256 intensity levels in the output image. Although this module size enhances the rendition of subtle colour tone shifts in the original image, spatial resolution (i.e., fine image detail) is lost, because the pixel assignments within the module are based on "averaged" colour intensity information. Additionally, this "grouping" can generate secondary patterns and false contouring detracting from printed image quality.

It is clear that digital or bi-level imaging, as described above, suffers from a mandated trade-off between image spatial resolution (favoured by small printed picture modular blocks) vis-a-vis good colour tone rendition (large modular size).

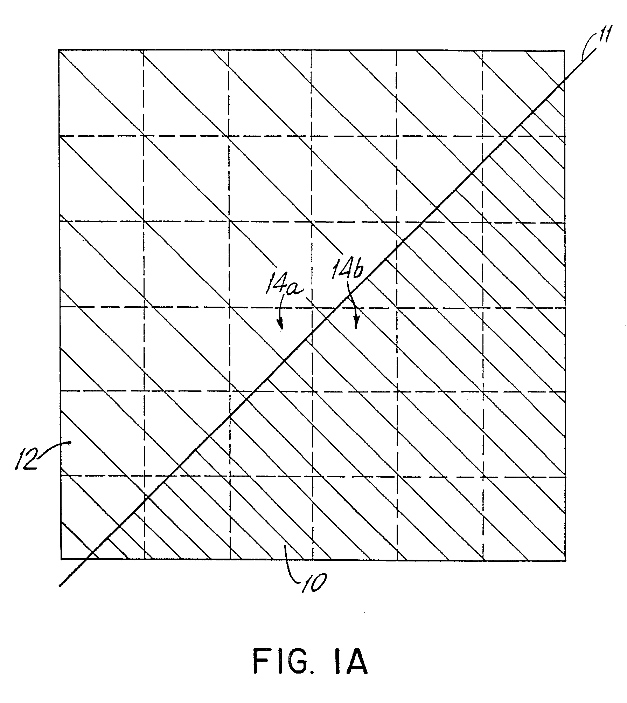

This prior art conflict between image spatial resolution vis-a-vis good colour tone variation and vice versa is graphically illustrated in Fig. 1A of the accompanying drawings. A segment of an input picture is divided into individual pixels forming a 6 x 6 matrix (36 total pixels). The input image segment is characterized by a lightly shaded region (upper left) and a region of higher density colour (lower right) separated by diagonal boundary 11.

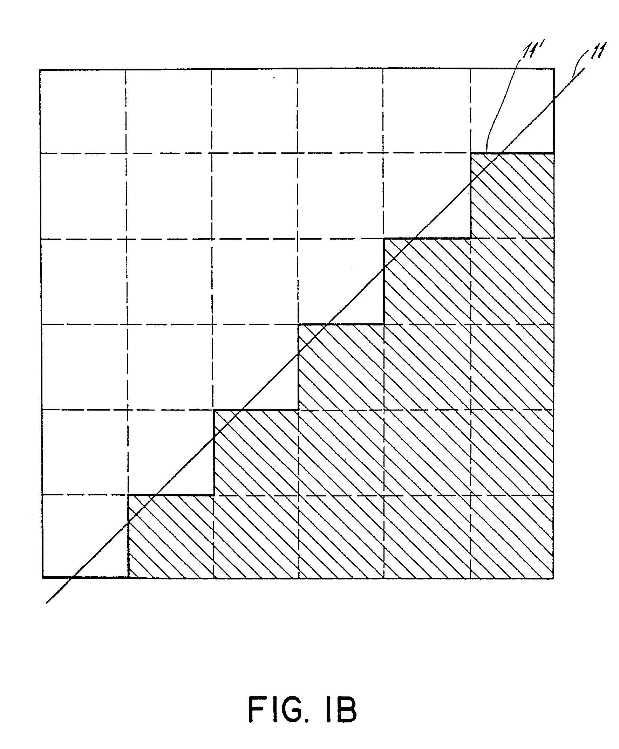

Reproduction of this simple, dual shaded image segmentation by global thresholding techniques involves the selection of a "print" or "no-print" command at each of the 36 pixel positions. Print instructions based on a threshold value (as discussed above) in a pixel-by-pixel basis (Fig. 1B) results in a "no-print" decision for pixels in the lightly shaded region above line 11, e.g., pixel 12, because all these pixel values will fall below the threshold value. This region will be left white. The individual pixels 14 located on boundary 11 are assigned "print" or "no-print" depending on the threshold value (and would all be assigned "no-print" commands for the image shown at a 50% threshold). In any event, these individual pixels will form an edge 11 between the light and dark region with good single pixel spatial resolution thus accurately approximating that of the input image to be reproduced. However, all pixels in the coloured portion of the image will "print" (i.e., the colour density is above the threshold value) and no variation in colour intensity is possible for this region in the printed image. That is, all colour intensity values from 50% to 100% are reproduced alike. Spatial resolution is thus preserved at the expense of colour intensity definition.

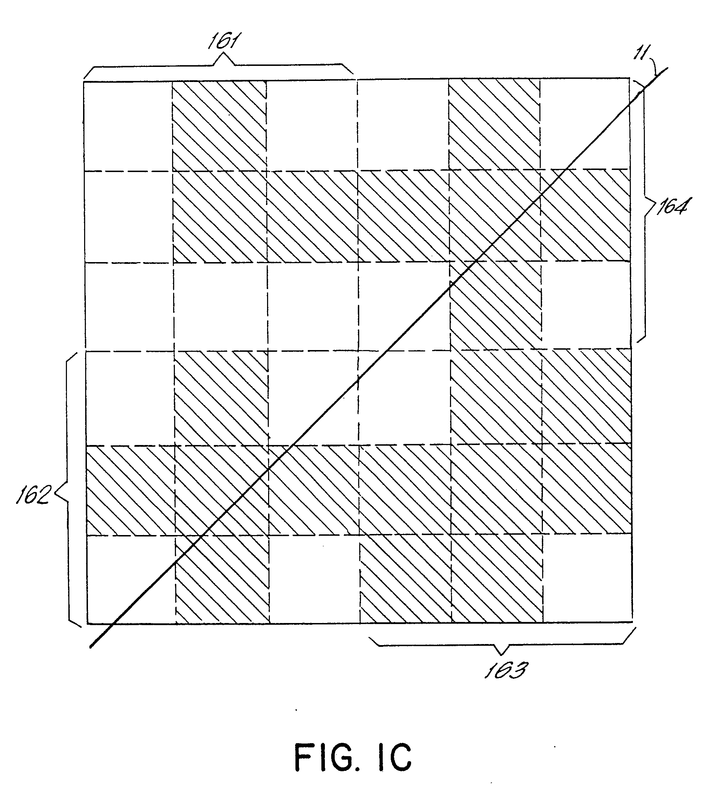

Colour tonal variations can be salvaged through half-tone techniques by conceptually grouping the pixels into modules 161-164 of Fig. 1C (e.g., each formed by a 3x3 pixel square), thus providing ten possible colour intensity levels (i.e., nine print/no-print decision pixels providing a range in intensity variations from no pixels printed to all nine pixels printed) for that module location. In this way, a shade of colour is provided to module 163 by assigning "print" commands to a majority (seven) of the pixels within that module in accordance with the assumed high density of colour intensity in the image component encompassed by pixel module 163. At a distance, the eye tends to average these seven coloured and two white printed pixels into a colour intensity resembling the input image at that module location. Similarly, modules 162 and 164 will have "print" decisions for five of the nine pixel locations forming a shading of colour intermediate between the two regions. Continuing, module 161 will have "print" decisions at three pixel locations, reflecting its lighter shading of colour in comparison to the other modules. These four half-tone dots (161-164) will accurately represent the average colour saturation of the two regions. However, the edge resolution of straight line 11 of Fig. 1 has now become completely lost.

Digital bi-level printing involves the selection of a "print" or "no-print" command at each pixel location in the output image based on information derived from the input image in accordance with some strategy or algorithm. Two prior art strategies have been presented above. One has a one-to-one correspondence between input and output pixels providing good spatial resolution but poor colour intensity resolution. The second half-tone technique discussed hereinabove employs averaged output pixel modules yielding good colour definition but poor spatial resolution.

Objects and Summary of the Present Invention

It is an object of the present invention to provide an improved half-tone printing or display system.

More specifically, an object of the present invention is to provide a system for creating half-tone print or display images that can accurately reproduce both colour tone and spatial resolution image formation.

In accordance with one aspect of the present invention there is provided a method or apparatus for displaying half-tone images using a binary display device, in which method or apparatus the intensity of a pixel in a half-tone image stored in memory is related to the maximum intensity of pixels in that image and the decision to display the pixel using the binary displaying device is made on the basis of the intensity relation of the pixel and an internally generated random or pseudo random number.

In accordance with another more particular aspect of the present invention there is provided a half-tone printing or display system for generating print or display commands for an image formed of i.j image pixels, where i and j are integers not necessarily different from each other, the said system comprising: means for storing i.j image intensity values I(i, j) for the image to be printed or displayed; means for storing k print or display command patterns of m.n elements where m and n are integers not necessarily different from each other and substantially less than i and j respectively; and means for sequentially accessing said storing means for each I(i, j) image intensity value and, dependent upon said I(i, j) value, for accessing a corresponding one of said k stored print or display command patterns and retrieving from the accessed stored pattern a specific print or display command at a location dependent upon i modulo m, and j modulo n.

As will be explained fully hereafter the above and other objects of the present invention are realized in an exemplary system according to the invention which effects enhanced digital half-tone reproduction, thereby promoting good colour tone fidelity while retaining high spatial resolution. In accordance with this exemplary embodiment the input image is subdivided into a matrix of component pixels each representing a colour intensity value at a corresponding image location, and output print decisions and instructions are generated on a pixel-by-pixel basis, thus retaining high spatial resolution, with the output print determinations made on a statistical probability basis. One preferred way to make the output print determinations is to store a plurality of decision making matrix print/no-print patterns and to select one such matrix pattern for each pixel dependent upon the pixel image intensity value, the print/no-print decision for that particular pixel being made by selection from the selected matrix pattern at a matrix location determined on a pseudo-random basis utilizing modulo computation on the co-ordinates of the location of the respective pixel in the input (and output) image.

Further features and aspects of the invention are set forth with particularity in the appended claims and, together with the abovementioned features, will be well understood by those possessed of the appropriate skills from consideration of the following description given with reference to the accompanying drawings.

Brief Description of the Drawings

Figs. 1A, 1B, and 1C are graphical representations of prior art image reproduction schemes, as discussed above;

Fig. 2 is a block diagram of system components required for the practice of the subject invention;

Figs. 3A and 3B are exemplary print decision matrix patterns for use in the practice of the present invention and stored in ROM 28 of Fig. 2 for 16-by-16 pixel groupings;

Fig. 3C is a print decision matrix pattern of the type of Figs. 3A and 3B, but for 8-by-8 pixel groupings;

Fig. 4 is a program flow chart for an exemplary system in accordance with the subject invention; and

Figs. 5A-C schematically represents multicolour image printing or display according to the invention.

## DESCRIPTION OF THE INVENTION

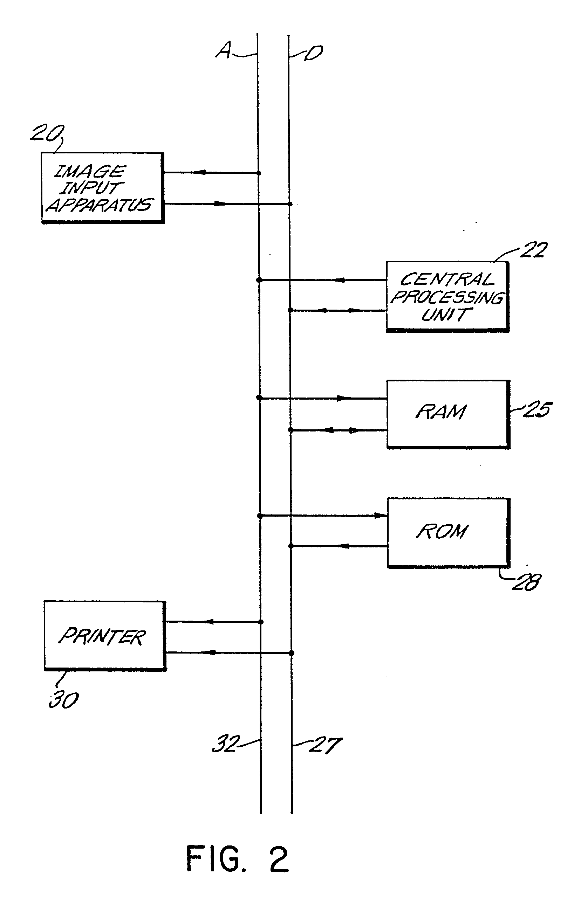

In practice, a system embodying the invention might employ digital computer apparatus such as that depicted in Fig.2. An input element 20 supplies an image to be printed (common forms of input devices 20 may include video cameras or CCD (charge couple device) scanners; data input terminals; and/or memory devices). The image memory ("frame buffer") disclosed in US patent application Serial No. 728,922 filed April 30, 1985 for "Stored Programs Controlled Packaging Development and Printing Apparatus", the disclosure of which is incorporated herein by reference, is one such image input device.

The image to be printed, supplied by source 20, is loaded into a random access memory (RAM) 25 via address and data buses 32 and 27 under central processor 22 control. While usually not physically segregated, that portion of RAM 25 containing the image may be referred to as an image memory. As an exemplary illustration, the image memory portion of RAM 25 might correspond to a pixel matrix of 480 rows and 512 columns providing an approximate representation of a signal raster provided by a television camera.

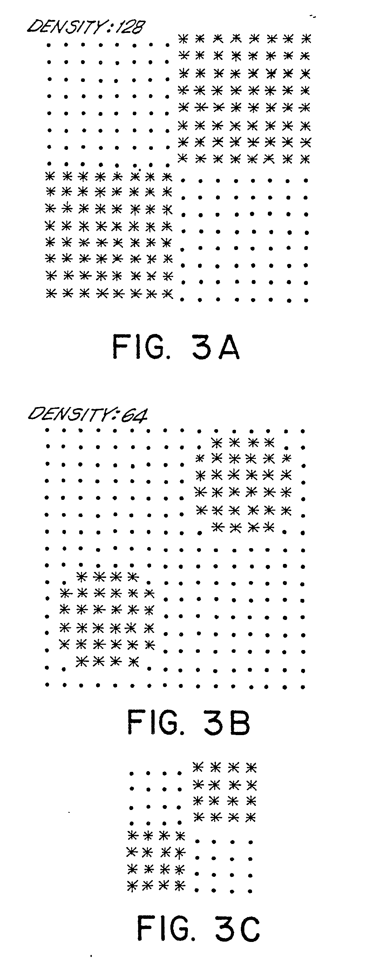

Connected to buses 32 and 27 in addition to the input apparatus 20, RAM 25 and CPU 22, are a read only memory (ROM) 28 and printer 30. ROM 28 stores the system program and an array of S (e.g. 256) print/no-print patterns typified by Figs. 3A and 3B to be described hereinafter. The system program and the print/no-print patterns may alternatively be stored in RAM 25, and the ROM 28 omitted.

RAM 25 also comprises an output print memory which stores an output print matrix, i.e. for the abovementioned example a collection of 480 x 512 print/no-print decisions as required for reproduction of the image to be printed. While a 480 x 512 element image has been assumed for specificity of illustration, any other element content can be employed - with or without identity between the input image and the output printed picture.

The printer 30 is of a type which independently prints/does not print at 480 x 512 (assumed but certainly not by way of limitation) points governed by the RAM 25 output print memory contents under control of processor (CPU) 22. The printer can be single colour - or multiple colour as by multiple passes. Per se well known dot matrix thermal or impact printers are commercially available which can be utilized in the practice of the invention.

In accordance with the invention printing with the above described apparatus is effected by making a print/no-print decisions on an output pixel-by-pixel basis with the aim of preserving spatial resolution. The print decisions can be regarded as being made on a probability basis for each pixel. Thus, in the simplest terms, if an input image pixel has an intensity of I intensity units on a scale between zero and IMAX (that is to say a scale from white to maximum colour saturation), the probability of printing or not printing a corresponding output pixel may be regarded as a function of I/IMAX, with the probability of a given pixel being printed being low for a low value of I/IMAX and high for a high value of I/IMAX.

This teaching could be put into effect by virtue of print decisions being made in each instance by first generating a random number between 0 and 1, as by the computer operation RND for example, and then comparing this number with the scaled relative intensity (I/IMAX) for the pixel position in question. This technique may be expressed by the schematic statement:

IF RND $\leq$ I/IMAX, THEN OUT $=$ 1 ELSE OUT $=$ 0, where OUT is the print/no-print output variable for the particular pixel location, and $0 \leq$ RND $\leq 1$.

However, in order to obviate distortion-producing random statistical bunching, the random number method presented above can be substantially enhanced by a modified approach in which print/no-print decisions are stored in a library of decision making matrices each of which is related to a respective one of a predetermined plurality of scaled pixel intensity values (I/IMAX). A print decision for each pixel of the input image is made by using its picture intensity I to select a corresponding one of the stored matrix patterns, and reading print ("1") or no-print ("0") values from the selected matrix pattern on a random or pseudo-random basis. Each matrix stored in computer memory has $\underline{n}$ x $\underline{m}$ locations holding predetermined print decision patterns where each position in the matrix is either a "1" (print command) or "0" (no-print command), and the "1's" may advantageously be spatially grouped into uniform clusters. Assuming that the product $\underline{n}$ x $\underline{m}$ corresponds to the predetermined number of scaled pixel intensity values available, it should be clear that the library will consist of S (where $S = \underline{n}$ x $\underline{m}$) matrices each containing a different number or density of print commands (1's), i.e. a different ratio of print to no-print commands. In this way, a probability based print decision is maintained, whilst random bunching is precluded because the print decisions in the accessed matrix are preformed into print/no-print decisions reflecting the colour saturation for the particular pixel density.

Figs. 3A,3B and 3C show exemplary decision making matrices in which the periods represent no-print decisions and the asterisks represent print decisions. In Figs.3A and 3B, $\underline{n} = \underline{m} = 16$ and in Fig.3C $\underline{n} = \underline{m} = 8$. It should be appreciated that in the case where $\underline{n} = \underline{m} = 16$ there may be made available in memory any number of matrices up to 256 to represent up to 256 different values of I/IMAX. This assumes that the data defining the colour tone of each pixel in the stored image is capable of defining up to 256 half-tone values for each pixel. If the data for each pixel is only able to define, say, 64 half-tone values for each pixel then, in order to reduce the amount of memory space needed to store the matrices, matrices such as the 8 x 8 matrix shown in Figure 3C may instead be used. Typically $\underline{m} = \underline{n}$ but this is not essential to the working of the invention. If one assumes in Fig.3A and Fig.3B that the maximum number of different values for I/IMAX is 256, then for a given pixel in the stored image for which I/IMAX = 0.5 the intensity or density of that pixel would be 128 on a scale from 0 to 256 and the matrix in Fig.3A would be selected. Similarly, if I/IMAX = 0.25 then the matrix in Fig.3B would be selected. The deciding matrices can be stored in on- or off-line memory.

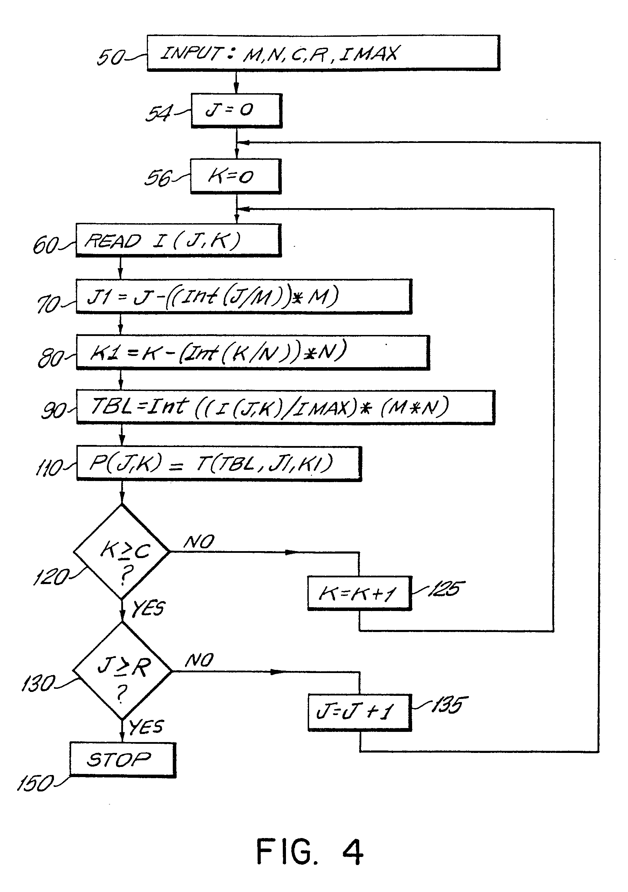

The choice of which location to read in a selected decision making matrix is effected in a random or pseudo-random manner and can for example be made in accordance with the spatial position of the respective pixel in the half-tone image on a rowwise modulo $n$ and columnwise modulo $m$ basis. Fig. 4 of the accompanying drawings comprises a schematic flow chart for system processing to define an output print pattern from the input image in accordance with this modulo basis. The schematic BASIC-type instructions employed are for purposes of illustration only and alternative programming languages could be employed.

In Fig. 4 and in the discussion which follows, process variables are employed as follows:

Plain Variables:

| IMAX | = | Maximum colour intensity at any image location (e.g., 256 as assumed above); |
| R | = | Number of rows in the image matrix (e.g. 480 in the example assumed above); |
| C | = | Number of columns in the image matrix; |
| M | = | Number of rows in the decision making matrix (Figs.3A,B); |
| N | = | Number of columns in the decision making matrix. |
| TBL | = | Designation of the appropriate matrix map (one of the S such matrices mentioned above) for use; |

Counters:

| J | = | Row number of a pixel in the composite image; |
| K | = | Column number of a pixel in the composite image; |
| J1 | = | Row number (J) on a modulo M basis; |
| K1 | = | Column number (K) on a modulo N basis. |

Indexed Variables:

| I(J,K) | = | The colour intensity of the matrix pixel at row J and column K. |
| P(J,K) | = | Print (output) image. The contents of P(O,0),...,P(R,-C) which define the output print/no-print pattern. |
| T(TBL,J1,K1) | = | Print/no-print value read from position J1, K1 of table TBL. |

With the above definitions in mind and addressing now the flow chart of Fig. 4, the first operative step 50 interactively enters via a keyboard or the like the number of rows (M) and columns (N) for the decision making matrices (e.g., the numbers 16 and 16 for the matrix library exemplified by Figs. 3A and 3B); the number of rows (R) and columns (C) in the image matrix; and the maximum image intensity value IMAX. Steps 54 and 56 initialize the pixel row (J) and column (K) running indices to an initial value of 0. alternatively, these values can be preset through default values permanently preserved within computer memory.

Operations 60 through 110 described below are executed once to process data for each pixel. The processing of Fig. 4 proceeds along the first row (J=0) of pixels in the input image as the column counter K is sequentially augmented from 0 to C. When data processing for a row is completed (K=C), the row variable J is incremented by one to proceed to the next row and the column counter K is restored to 0.

Proceeding for the pixel processing for the first pixel (at J=0 and K=0), step 60 reads into the central processing unit 22 from RAM 25 the intensity value I(0,0) representing the colour intensity or relative saturation from that local component area of the image. Steps 70 and 80 transform the row counter J into modulo M form (variable J1), while operation 80 transforms the column index counter K into a modulo N-determined variable K1 as by

$$J1 = J-((INT(J/M))*M) \quad (2)$$
$$K1 = K-((INT(K/N))*N) \quad (3)$$

Some reflection will confirm to those skilled in the art that the computations of program statements (2) and (3) above identically effects the modulo computation discussed above. Thus, for example, for the row computation J1, the function INT(J/M) computes the largest number of times that the modulus M will divide into the variable J. This is multiplied by the modulus M and the result subtracted from the row number J. J1 is thus equal to the remainder as required for modulo computation. The same computation applies for the K1 correspondent for the variable K determined on a modulo N basis. For the assumed first pass through the steps 60-110, of course, J1=K1=J=K=0. By virtue of these modulo computations, and as has previously been explained herein, the position of a pixel in the input image gives rise to a pseudo-random matrix location address for use with an appropriately selected one of the library of decision making matrices in order to determine whether a print or no-print command should be issued.

In Step 90 of Fig.4 the expression:
$$TBL = INT((I(J,K)/IMAX)*(M*N)) \quad (4)$$
selects that one of the plurality of decision making matrices that is appropriate to the ratio I/IMAX for the pixel in question, the matrices being identified by respective table identifiers TBL. This is effected by normalizing the intensity I(J,K) at the location J,K of the pixel in question by the peak intensity value IMAX, and multiplying the resulting fraction by the number of matrix positions in each of the decision making matrices, that is to say by MxN for the example where there are MxN values for I/IMAX and correspondingly MxN matrix positions in each decision making matrix. The integer value obtained from this computation is then determined, it being appreciated that not all decision matrix sizes will give an integer result, and becomes the matrix choosing variable TBL. Thus, for example, for the 50% saturation case, TBL would store the quantity 128 which would select the matrix of Fig.3A for use as the decision making matrix.

Having selected the decision making matrix specified by TBL for use, a print ("1") or no-print ("0") within the matrix TBL is extracted therefrom at the matrix address location J1,K1 previously computed. The single bit value T (TBL,J1,K1) thus is a function of the matrix selected (TBL), and of the row (J1) and column (K1) within the selected matrix. The output print/no-print specifier for the pixel P(J,K) processed by the steps 60-110 is thus defined by:
$$P(J,K) = T(TBL,J1,K1). \quad (5)$$
The determination of the output pixel print/no-print bit P(J,K) is thus completed.

Test 120 next determines whether processing for the entire row is completed, i.e., determines whether the column index variable K is equal to or greater than the width of the full output page which contains C columns. If so ("YES" branch), processing proceeds to test 130 to determine whether all rows have been printed. If all columns have not been printed ("NO" branch from test 120), step 125 increments the column counter by one (K=K+1) and processing returns to operation 60 to process the next pixel, i.e. that at location J=0,K=K+1. The above-described processing reoccurs until K=C at which point an entire row has been completed and processing follows the YES branch of test 130 to begin processing for the next row.

Each time a row is completed, the row index J is augmented by one (step 135) and processing returns to step 56 to clear the column counter K to 0. The print/no-print decisions for the next row P(J,K) are sequentially determined as above-described until the final row is completed - at which point processing follows the YES branch from test 130 to the STOP command 150. At this point, the full output or print image register is complete, i.e. all of the print variables P(0,0),...,P(R,C) have been computed and can be stored in memory.

The output image may thereafter be printed as desired. For example, in one well known printing configuration, an image receiving paper sheet and a transfer sheet bearing colour are aligned under a moving printhead which includes a number (e.g. 2000) of separate print point mechanisms (strike points, thermal transfer points or the like) to print on a row by row basis. For such a printer, RAM 25 issues the P(0,0),...,P(0,C) first row data to control printing at one row by issuing print/no-print commands to the printer striker or heat transfer points. When this is completed, the active printer arm indexes one row position relative to the receiving paper and colour transfer sheet and the next row of data P(1,0),...,P(1,C) is employed to control the next row of printing. This continues until the final row P(R,0),...,P(R,C) data has been used to complete the printed image.

Consider, for example, an image stored in an image memory consisting of a pixel matrix of 480 rows and 512 columns (an approximate representation of a signal raster produced by a television camera). Further consider an image element in row 236 and column 326 or, in matrix terms, I(236, 326) where I is the colour intensity level for that pixel position in the input image. Assume that there are up to 256 different intensity levels for pixels in the input image and correspondingly that the size of the decision making matrices is 16 x 16, i.e. that n = m = 16, so that each matrix contains 256 print/no-print locations. If for example I(236, 326)/IMAX = 0.5 (medium colour intensity), the relative colour tone of that pixel is 128 (256 x 0.5). The matrix pattern that corresponds to a density of 128 (Fig.3A) is accessed, and the print instruction at column 6 (326 modulo 16 = 6, i.e., 6 is the remainder when the highest number (20) of the modulus 16 is subtracted from 326) and row 12 (236 - (14 x 16)) is retrieved from the matrix pattern. In Fig. 3A, column 6 and row 12 of the matrix pattern (0.5 of maximum intensity or colour saturation) provides a "1" or positive "print" command for the pixel located in column 326 and row 236 in the output image. It may be seen from Fig. 3A that there are 128 print and 128 no-print stored entries and thus prior to the modulo restriction, the probability of printing at that pixel is I/IMAX or 0.5.

It should be noted that the generation of half-tone images per the above described techniques can be accomplished at a location remote from the actual printing apparatus. In this way, substantial savings in data transmission costs are possible, because the subject invention reduces the amount of requisite data for a given image to be printed to simply a print or no-print instruction for each pixel without a corresponding loss in image quality.

Thus by the processing above-discussed, the input image I(J,K) gives rise to output printed graphics which preserves both spatial resolution and colour variation fidelity.

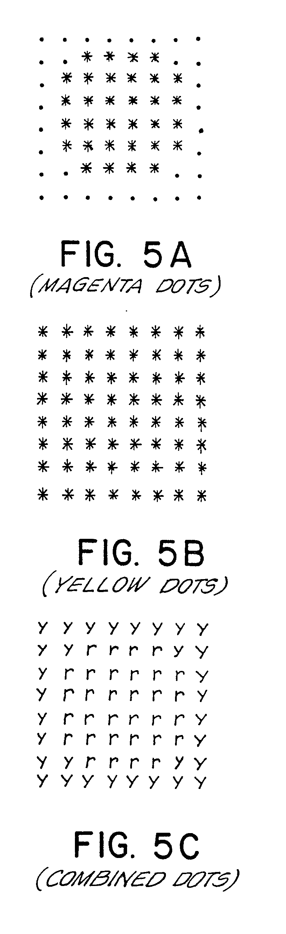

The above discussion has assumed that printing will be done in one colour. In fact, full colour printing may be effected by multiple passes of the print apparatus described above, where plural output print matrices P(C,J,K) acting in spatial registration are employed one for each different printed primary colour C (typically where C runs from 1 through 3) acting in spatial registration. Thus, for example, full colour printing may be effected by using a print/no-print defining output field for each of magenta, yellow and cyan; for the red, green and blue control signals for a colour television image defining signal; or the like. Thus, for example, if Fig.5A (where an asterisk (*) represents print and a period (.) represents no-print) represents printing of a 50% area of a picture with a magenta half-tone dot, and 5B represents 100% printing with a yellow half-tone dot, then Fig.5C represents the combination of Figs. 5A and 5B to form a printed image where $y$ and $r$ indicate yellow and red respectively, red being formed by the superimposed yellow and magenta pixels. The half-tone picture of Fig.5C will appear orange when observed from a normal viewing distance.

The discussion presented above is for purposes of illustration only and it is appreciated that those skilled in the art may envisage ways to modify or vary the described embodiments of the subject invention without departing from the scope of the invention. For example, whilst the described embodiments have particularly concerned the printing of images, the invention is not limited to the production of printed images and is equally applicable to other display techniques.

## Claims

1. A method or apparatus for half-tone image reproduction characterized in that pixels of an input image are reproduced on a statistical probability basis involving the pixel image intensities.

2. A method or apparatus for half-tone image reproduction in which pixels of an input image are reproduced on the basis of go/no-go decisions made on an output pixel-by-pixel basis for preservation of spatial resolution, and wherein the go/no-go decisions are made on a statistical basis involving the pixel image intensities.

3. A half-tone printing or display system for generating print or display commands for an image formed of $i.$ $j$ image pixels, where $i$ and $j$ are independent integers, said system comprising: means for storing $i$ $j$ image intensity values I(i, j) for the image to be printed or displayed; means for storing $k$ print or display command patterns of $m.n$ elements where $m$ and $n$ are independent integers substantially less than $i$ and $j$ respectively; and means for sequentially accessing said storing means for each I(i, j) image intensity value and, dependent upon said I(i, j) value, for accessing one of said $k$ stored print or display command patterns and retrieving from the accessed stored pattern a specific print or display command at a location dependent upon i modulo $m$, and $j$ modulo $n$.

4. A combination as in claim 3, further comprising printer or display means connected to said print or display command generating means.

5. A combination as in claim 3, further comprising printer or display means for selectively printing or displaying at said $i.$ $j$ points controlled by said print or display command generating means.

6. A combination as in claim 3, further comprising print or display command patterns, wherein said patterns are uniform half-tone dots.

7. Half-tone image reproduction means comprising; image output means; memory means; and data processing means connected to said image output means and said memory means; said data processing means comprising output determining means for causing said image output means to output or not to output at plural image locations depending upon the desired image content about an image area corresponding thereto, said output determining means including probability dependent means rendering outputting more likely for image components having larger graphic densities.

8. A combination as in claim 7, wherein said probability dependent means comprises plural decision making matrices with differing affirmative output entries.

9. Binary image printing or display means comprising: means for storing plural output print or display maps each characterized by a different number of affirmative print or display entries thus each expressing a different print or display probability, means for supplying data representing image graphics information and location information for a plurality of pixels of the image to be reproduced, means for selecting an appropriate one of said plural stored print or display maps responsive to said image graphics information for each pixel, and output means for determining an output print or display or non-print or non-display command for said pixel from said selected print or display map dependent upon said pixel location data.

10. A combination as in claim 9, further comprising printer or display means connected to said output means.

11. A combination as in claim 9, further comprising print or display register means for storing the output of said output means, and printer or display means connected to said print or display register means.

12. A method or apparatus for displaying half-tone images using a binary display device, in which method or apparatus the intensity of a pixel in a half-tone image stored in memory is related to the maximum intensity of pixels in that image and the decision to display the pixel using the binary displaying device is made on the basis of the intensity relation of the pixel and an internally generated random or pseudo random number.

13. A method or apparatus according to claim 12, in which a plurality of display deciding matrices associated with a number of the said intensity relations are stored in memory and a location in the appropriate deciding matrix for a given pixel intensity is accessed and the information thereat is used to decide whether or not to display the pixel.

14. A method or apparatus according to claim 13 wherein the location that is accessed in the appropriate deciding matrix is determined on said random or pseudo-random basis.

15. A method or apparatus according to claim 14 wherein the pseudo-random basis utilized for determining said location involves modulo computation upon the co-ordinates of the respective pixel location in the input image.

FIG. 1A

FIG. IB

FIG. IC

FIG. 2

DENSITY:128

FIG. 3A

DENSITY:64

FIG. 3B

FIG. 3C

50 — INPUT : M,N,C,R,IMAX

54 — J = 0

56 — K = 0

60 — READ I (J,K)

70 — $J1 = J - ((Int(J/M)) * M)$

80 — $K1 = K - (Int(K/N)) * N$

90 — $TBL = Int((I(J,K)/IMAX) * (M*N))$

110 — $P(J,K) = T(TBL, J1, K1)$

120 — $K \geq C$ ? — NO → K = K+1 — 125

YES

130 — $J \geq R$ ? — NO → J = J+1 — 135

YES

150 — STOP

FIG. 4

# FIG. 5A
*(MAGENTA DOTS)*

# FIG. 5B
*(YELLOW DOTS)*

# FIG. 5C
*(COMBINED DOTS)*